# EUROPEAN PATENT APPLICATION

(11) **EP 4 832 326 A1**
(43) Date of publication of application: **28.10.2026**
(21) Application number: 25205685.8
(22) Date of filing: 30.09.2025
(51) Int. Cl.: H02M 1/14, H02M 3/158, H02M 3/156, H02M 1/10, H02M 1/00

(54) **DC/DC CONVERSION CIRCUIT, METHOD FOR CONTROLLING DC/DC CONVERSION CIRCUIT AND RELATED APPARATUS**

(30) Priority: 25.04.2025 CN 202510541432
(71) Applicant: Sungrow Power Supply Co., Ltd., Hefei, Anhui 230088 (CN)
(72) Inventor: HU, Fanyu, Hefei, Anhui 230088 (CN); PAN, Nianan, Hefei, Anhui 230088 (CN)
(74) Representative: Prinz & Partner mbB

(57) **Abstract**

A DC/DC conversion circuit, a method for controlling a DC/DC conversion circuit and a related apparatus are provided. The DC/DC conversion circuit includes at least one BUCK circuit and at least one voltage regulator. An input end of the BUCK circuit is connected to a corresponding interface of an input end of the DC/DC conversion circuit. An output end of the BUCK circuit is connected to an output end of the DC/DC conversion circuit. A diode is arranged between a positive transmission branch and a negative transmission branch in the BUCK circuit, and is connected in series with the voltage regulator.

## Description

### FIELD

The present disclosure relates to the technical field of power conversion, and in particular to a DC/DC conversion circuit, a method for controlling a DC/DC conversion circuit and a related apparatus.

### BACKGROUND

In a two-stage inverter system, a DC/DC conversion circuit is typically provided before a post-stage DC/AC conversion circuit to regulate a voltage of a power supply connected to a direct-current side of the system. With the continuous improvement of a voltage level of the direct-current side of the system, a requirement for withstand voltage level of power switching devices, such as Insulated Gate Bipolar Transistor (IGBT) or Metal-Oxide-Semiconductor Field-Effect Transistor (MOSFET) and the like in a preceding-stage DC/DC conversion circuit is increasing. In addition, the ripple ratio of an inductor current in the preceding-stage DC/DC conversion circuit is generally high, and thus an inductor with a large inductance is provided or a high switching frequency is employed, which is not conducive to the product design of the devices.

### SUMMARY

In view of the above issues, a DC/DC conversion circuit, a method for controlling a DC/DC conversion circuit and a related apparatus are provided according to the present disclosure, to reduce the voltage withstood by power switching devices and to reduce the ripple ratio of an inductor current in a preceding-stage DC/DC conversion circuit. The detailed solutions are as follows.

A direct-current/direct-current (DC/DC) conversion circuit is provided according to a first aspect of the present disclosure. The DC/DC conversion circuit includes: a BUCK circuit and a voltage regulator. A quantity of the BUCK circuit is at least one. A quantity of the voltage regulator is at least one. An input end of the BUCK circuit is connected to a corresponding interface of an input end of the DC/DC conversion circuit; an output end of the BUCK circuit is connected to an output end of the DC/DC conversion circuit; and a diode is arranged between a positive transmission branch and a negative transmission branch in the BUCK circuit, and is connected in series with the voltage regulator.

In an embodiment, the quantity of the BUCK circuit and the quantity of the voltage regulator each are greater than 1, and the BUCK circuits are connected to the voltage regulators in one-to-one correspondence; the quantity of the voltage regulator is greater than 1, and a quantity of the BUCK circuit connected to at least two of the voltage regulators is at least one; the quantity of the BUCK circuit is greater than 1, and at least two of the BUCK circuits are connected to one of the voltage regulator; or the quantity of the voltage regulator is 1, the quantity of the BUCK circuit is greater than 1, and each of the BUCK circuits is connected in series with the voltage regulator.

In an embodiment, the voltage regulator includes: a voltage stabilizing chip. An output end of the voltage stabilizing chip is connected in series with the diode between the positive transmission branch and the negative transmission branch in the BUCK circuit; the voltage regulator comprises a voltage stabilizing load, and an input end of the voltage stabilizing load is connected in series with the diode between the positive transmission branch and the negative transmission branch in the BUCK circuit; or the voltage regulator comprises a BOOST circuit, and an input end of the BOOST circuit is connected in series with the diode between the positive transmission branch and the negative transmission branch in the BUCK circuit.

In an embodiment, when the voltage regulator includes the BOOST circuit, an output end of the BOOST circuit is connected to the output end of the DC/DC conversion circuit; or, an output end of the BOOST circuit is connected to a battery or a load circuit.

In an embodiment, the BOOST circuit is implemented by a two-level BOOST topology or a three-level BOOST topology.

In an embodiment, the DC/DC conversion circuit further includes: at least one unidirectional conduction device. The unidirectional conduction device is connected in series with a switching transistor in the BUCK circuit; and a forward direction of the unidirectional conduction device is a direction in which current flows though the unidirectional conduction device when the switching transistor connected to the unidirectional conduction device is on.

In an embodiment, a positive electrode of the input end of the BUCK circuit is connected to a positive electrode of the corresponding interface of the input end of the DC/DC conversion circuit, a positive electrode of the output end of the BUCK circuit is connected to a positive electrode of the output end of the DC/DC conversion circuit, a negative electrode of the input end of the BUCK circuit and a negative electrode of the output end of the BUCK circuit are both connected to a negative electrode of the corresponding interface of the input end of the DC/DC conversion circuit and both connected to a negative electrode of the output end of the DC/DC conversion circuit, and the voltage regulator is connected between the diode and the negative transmission branch in the BUCK circuit; or
a negative electrode of the input end of the BUCK circuit is connected to a negative electrode of the corresponding interface of the input end of the DC/DC conversion circuit, a negative electrode of the output end of the BUCK circuit is connected to a negative electrode of the output end of the DC/DC conversion circuit, a positive electrode of the input end of the BUCK circuit and a positive electrode of the output end of the BUCK circuit are both connected to a positive electrode of the corresponding interface of the input end of the DC/DC conversion circuit and a positive electrode of the output end of the DC/DC conversion circuit, and the voltage regulator is connected between the diode and the positive transmission branch in the BUCK circuit.

According to a second aspect of the present disclosure, a method for controlling a DC/DC conversion circuit is provided. The method includes: controlling a voltage regulator connected in series with a diode in a BUCK circuit of the DC/DC conversion circuit to operate aiming at a preset voltage, where the diode is arranged between a positive transmission branch and a negative transmission branch in the BUCK circuit; and controlling operation of the BUCK circuit.

In an embodiment, the controlling operation of the BUCK circuit includes controlling the BUCK circuit to operate at a maximum power point of a power supply connected to the BUCK circuit.

In an embodiment, the controlling operation of the BUCK circuit includes: regulating, in response to an input voltage of the BUCK circuit being greater than a voltage of the voltage regulator connected to the BUCK circuit, the input voltage of the BUCK circuit; and controlling, in response to that at least two BUCK circuits connected to one voltage regulator and input characteristics of the at least two BUCK circuits meet a preset consistency condition, or in response to the voltage of the voltage regulator connected to the BUCK circuit being equal to a maximum power point voltage of a power supply connected to the BUCK circuit, a switching transistor in the BUCK circuit to be always off.

The regulating the input voltage of the BUCK circuit includes: controlling the switching transistor in the BUCK circuit to perform a chopping operation.

In an embodiment, the controlling the voltage regulator connected in series with the diode in the BUCK circuit of the DC/DC conversion circuit to operate aiming at the preset voltage includes: controlling the voltage regulator to operate aiming at a voltage of the voltage regulator reaching the preset voltage, where the voltage regulator withstands a preset portion of the input voltage of the BUCK circuit connected to the voltage regulator

In an embodiment, when at least two BUCK circuits are connected to one voltage regulator, the preset voltage is: a minimum voltage among input voltages of the at least two BUCK circuits connected to the voltage regulator; or a preset value under a current lighting condition in response to a power supply connected to the BUCK circuit including a photovoltaic module.

According to a third aspect of the present disclosure, a controller is provided. The controller includes: a processor and a memory. The memory is configured to store a program, an instruction, or a code, and the processor is configured to perform, when executing the program, the instruction, or the code in the memory, the method for controlling a DC/DC conversion circuit according to the second aspect or any of the implementations in the second aspect as described above.

According to a fourth aspect of the present disclosure, a power converter is provided. The power converter includes: a controller and the DC/DC conversion circuit according to the first aspect or any of the implementations in the first aspect as described above. The DC/DC conversion circuit is controlled by the controller. The controller is configured to perform the method for controlling a DC/DC conversion circuit according to the second aspect or any of the implementations in the second aspect as described above.

In an embodiment, the power converter further includes: a direct-current/alternating-current (DC/AC) conversion circuit. A direct-current side of the DC/AC conversion circuit is connected to an output end of the DC/DC conversion circuit; an alternating-current side of the DC/AC conversion circuit is configured to connect at least one of a power grid and a load; and the DC/AC conversion circuit is controlled by the controller.

According to the above technical solutions, in the DC/DC conversion circuit according to the present disclosure, an input end of a BUCK circuit is connected to a corresponding interface of an input end of the DC/DC conversion circuit, an output end of the BUCK circuit is connected to an output end of the DC/DC conversion circuit, and a diode between a positive transmission branch and a negative transmission branch in the BUCK circuit is connected in series with a voltage regulator. When the switching transistor is turned off, a voltage across an inductor in the BUCK circuit is equal to a difference between an input voltage of the BUCK circuit and a voltage of the voltage regulator, reducing the change rate of an inductor current, thus reducing the ripple ratio of the inductor current, so that the inductor can be implemented by a device with a small inductance. When the switching transistor is turned on, a voltage withstood by the switching transistor is equal to a difference between an output voltage of the DC/DC conversion circuit and the voltage of the voltage regulator, thus reducing the voltage withstood by the switching transistor.

### BRIEF DESCRIPTION OF THE DRAWINGS

The above and other features, advantages and aspects of the embodiments of the present disclosure will become more apparent with reference to the following detailed implementations in conjunction with the drawings. Throughout the drawings, the same or similar reference numerals denote the same or similar elements. It should be understood that, the drawings are illustrative, and components and elements are unnecessarily drawn to scale.
FIG. 1 is a schematic structural diagram of a DC/DC conversion circuit according to an embodiment of the present disclosure;
FIG. 2 is a schematic structural diagram of a DC/DC conversion circuit according to another embodiment of the present disclosure;
FIG. 3 is a schematic structural diagram of a DC/DC conversion circuit according to another embodiment of the present disclosure;
FIG. 4 is a circuit diagram of a DC/ DC conversion circuit according to an embodiment of the present disclosure;
FIG. 5 is a schematic diagram of a current path of a DC/DC conversion circuit according to an embodiment of the present disclosure;
FIG. 6 is a schematic diagram of a current path of a DC/DC conversion circuit according to another embodiment of the present disclosure;
FIG. 7 is a schematic diagram of a current path of a DC/DC conversion circuit according to another embodiment of the present disclosure;
FIG. 8 is a schematic diagram of a current path of a DC/DC conversion circuit according to another embodiment of the present disclosure;
FIG. 9 is a schematic diagram of a current path of a DC/DC conversion circuit according to another embodiment of the present disclosure;
FIG. 10 is a schematic diagram of a current path of a DC/DC conversion circuit according to another embodiment of the present disclosure;
FIG. 11 is a circuit diagram of a DC/DC conversion circuit according to another embodiment of the present disclosure;
FIG. 12 is a flowchart of a method for controlling a DC/DC conversion circuit according to an embodiment of the present disclosure;
FIG. 13 is a schematic structural diagram of a controller according to an embodiment of the present disclosure;
FIG. 14 is a schematic structural diagram of a power converter according to an embodiment of the present disclosure;
FIG. 15 is a schematic structural diagram of a power converter according to another embodiment of the present disclosure;
FIG. 16 is a schematic structural diagram of a power conversion system according to an embodiment of the present disclosure; and
FIG. 17 is a schematic structural diagram of a power conversion system according to another embodiment of the present disclosure.

### DETAILED DESCRIPTION

Hereinafter, the embodiments of the present disclosure are described in conjunction with the drawings in the embodiments of the present disclosure. The terms in the embodiments of the present disclosure are only for the purpose of explaining specific embodiments of the present disclosure, rather than limiting the present disclosure.

The embodiments of the present disclosure are described in conjunction with the drawings. Apparently, the described embodiments are only some rather than all of the embodiments of the present disclosure. All the other embodiments obtained by those skilled in the art based on the embodiments of the present disclosure without any creative work fall within the scope of protection of the present disclosure. Those skilled in the art should understand that the technical solutions provided according to the embodiments of the present disclosure are still applicable to similar technical problems, despite the development of technology and the emergence of new scenarios.

In the specification, claims, and drawings of the present disclosure, the terms "first", "second", and so on are intended to distinguish similar objects rather than describe a specific order or sequence. It should be understood that the terms used in this way are interchangeable in an appropriate case, and this is merely a differentiation manner used when objects having a same attribute are described in the embodiments of the present disclosure. Moreover, the terms such as "comprise", "have" or any other variants thereof are intended to cover the non-exclusive inclusion, so that a process, method, system, product or device that includes a series of units is not necessarily limited to those units, but may include other units not expressly listed or inherent to such a process, method, product, or device.

A DC/DC conversion circuit is provided according to an embodiment of the present disclosure, to reduce the voltage withstood by power switching devices and to reduce the ripple ratio of an inductor current in a preceding-stage DC/DC conversion circuit. The detailed solutions are as follows.

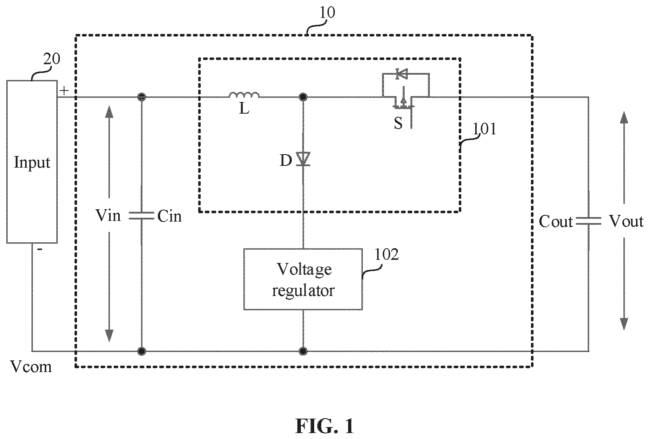

As shown in FIG. 1, the DC/DC conversion circuit 10 includes: at least one BUCK circuit 101 (for example, one BUCK circuit 101 is shown in FIG. 1) and at least one voltage regulator 102 (for example, one voltage regulator is shown in FIG. 1).

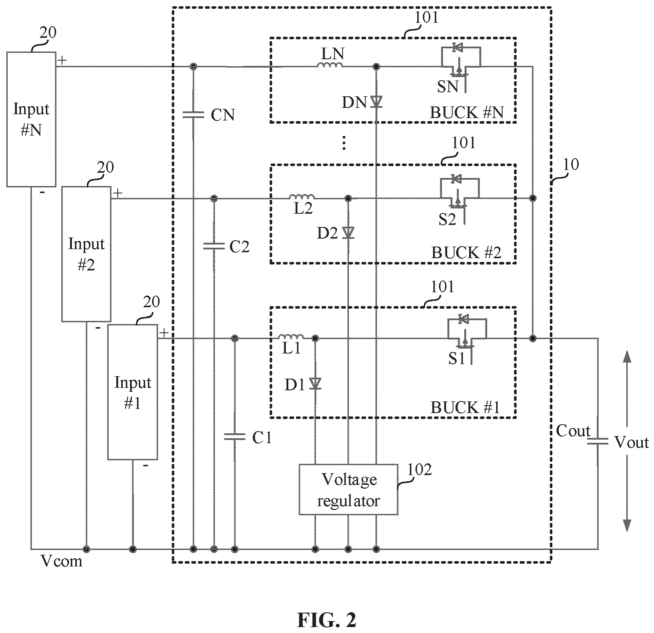

An input end of the BUCK circuit 101 is connected to a corresponding interface of an input end of the DC/DC conversion circuit 10. Various interfaces of the input end of the DC/DC conversion circuit 10 are configured to connect respective power supplies 20 (Input as shown in FIG. 1). One power supply 20 may be one photovoltaic string or at least two photovoltaic strings connected in parallel, or may be one battery cluster or at least two battery clusters connected in parallel. In addition, the respective power supplies 20 may be the same or different in configurations, depending on the specific application environment. In practice, a quantity of the BUCK circuit 101 may be greater than 1, and FIG. 2 shows N BUCK circuits 101 (BOOST #1, BOOST #2,..., BOOST #N as shown in FIG. 2) as an example. In this case, input ends of all the BUCK circuits 101 are connected to respective power supplies 20 (Input #1, Input #2,..., Input #N as shown in FIG. 2) via respective interfaces of the input end of the DC/DC conversion circuit 10.

An output end of the BUCK circuit 101 is connected to an output end (its voltage is Vout shown in FIG. 1) of the DC/DC conversion circuit 10. As shown in FIG. 2, when the quantity of the BUCK circuit 101 is greater than 1, the output ends of all the BUCK circuits 101 are connected in parallel, and are connected to the output end of the DC/DC conversion circuit 10. The output end of the DC/DC conversion circuit 10 may be connected to a direct-current side of a post-stage DC/AC conversion circuit in a photovoltaic inverter system. In practice, the output end of each of the BUCK circuits 101 may be connected to the direct-current side of the DC/AC conversion circuit via a direct-current bus.

FIGS. 1 and 2 show an example where the BUCK circuit 101 is implemented by a basic BUCK topology. As shown in FIGS. 1 and 2, the BUCK circuit 101 includes: an inductor (L as shown in FIG. 1, or L1, L2, ..., LN as shown in FIG. 2), a switching transistor (S as shown in FIG. 1, or S1, S2, ..., SN as shown in FIG. 2), and a diode (D as shown in FIG. 1, or D1, D2, ..., DN as shown in FIG. 2). The diode is connected between a positive transmission branch and a negative transmission branch of the BUCK circuit 101. The inductor is provided between the input end of the BUCK circuit 101 and the diode. As a power switching device, the switching transistor is provided between the diode and the output end of the BUCK circuit 101.

The switching transistor may be implemented by a MOSFET, an IGBT, or the like, and is not limited to this. A second terminal of the switching transistor may be an emitter shown in FIG. 1 or FIG. 2, and is not limited to this. Other implementations in the related technology also fall within the scope of protection of the present disclosure.

In addition, the diode between the positive transmission branch and the negative transmission branch in the BUCK circuit 101 is connected in series with the voltage regulator 102. As shown in FIG. 1, the diode D is connected in series with the voltage regulator 102 to form a branch, and the branch is connected between the positive transmission branch and the negative transmission branch of the BUCK circuit 101. In practice, a sequence of the voltage regulator 102 and the diode D connected in the branch is not limited. For example, the voltage regulator 102 may be connected between a cathode of the diode D and the negative transmission branch (as shown in FIG. 1 or FIG. 2), or the voltage regulator 102 may be connected between an anode of the diode D and the positive transmission branch (not shown). The connection of the voltage regulator 102 is not limited herein, depending on the specific application environment.

Taking the structure in FIG. 1 as an example, an input voltage of the BUCK circuit 101 is Vin, and an output voltage of the BUCK circuit is Vout. If there is no voltage regulator 102, then: when the switching transistor S is turned off, a voltage across an inductor L is the input voltage Vin; and when the switching transistor S is turned on, the voltage withstood by the switching transistor S is the output voltage Vout. In the case shown in FIG. 1 that the voltage regulator 102 is connected in series with the switching transistor S, assuming that an operating voltage of the voltage regulator 102 is V0, then the following occurs. When the switching transistor S is turned off, the voltage across the inductor L is Vin-V0, which is equivalent to reducing the voltage withstood by the inductor L during the current increase process. In such case, the change rate of an inductor current can be reduced, thus reducing the ripple ratio of the inductor current, so that the inductor can be implemented by a device with a small inductance. When the switching transistor S is turned on, the voltage withstood by the switching transistor S is Vout-V0, that is, the voltage withstood by the switching transistor S is reduced, so that the switching transistor S can be implemented by a power switching device with a small withstand voltage. The principle of the BUCK circuits 101 shown in FIG. 2 is the same as this, which is not described in detail.

It can be seen that, the ripple ratio of the inductor current and the magnitude of the voltage withstood by the power switching device can be controlled by regulating the voltage V0 of the voltage regulator 102. In this embodiment, the voltage V0 of the voltage regulator 102 is not limited, and the ripple ratio of the inductor current and the magnitude of the voltage withstood by the power switching device can be reduced as long as V0>0. When the voltage V0 of the voltage regulator 102 is large, the ripple ratio of the inductor current can be greatly reduced, and the voltage withstood by the switching transistor S during operation can be much lower than half of the system voltage level, which is beneficial to device selection.

With the DC/DC conversion circuit in this embodiment, the ripple ratio of the inductor current can be reduced through the above principle, so that the inductor can be implemented by a device with a small inductance. Moreover, the voltage withstood by the switching transistor can be reduced, so that the switching transistor can be implemented by a power switching device with a low withstand voltage. Thus, the DC/DC conversion circuit can be flexibly implemented based on cost requirements and application scenarios.

In addition, the inductor with a small inductance and the switching transistor with a small withstand voltage may be provided, reducing the cost of the DC/DC conversion circuit. A large quantity of the BUCK circuits 101 connected in parallel in the DC/DC conversion circuit indicates low cost of the DC/DC conversion circuit.

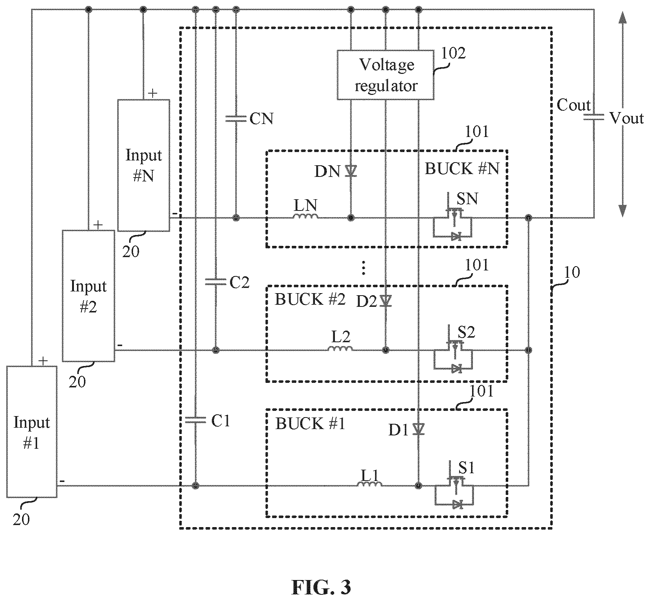

In practice, the BUCK circuit 101 may be in a common negative structure or a common positive structure. In the common negative structure as shown in FIG. 1 or FIG. 2, the input end and the output end of the BUCK circuit 101 share a common negative terminal (having a potential Vcom shown in FIGS. 1 and 2). That is, a negative electrode of the input end of the BUCK circuit 101 and a negative electrode of the output end of the BUCK circuit 101 are both connected to a negative electrode of a corresponding interface of the input end of the DC/DC conversion circuit 10 and both connected to a negative electrode of the output end of the DC/DC conversion circuit 10. A positive electrode of the input end of the BUCK circuit 101 is connected to a positive electrode of the interface of the input end of the DC/DC conversion circuit 10, and is connected to a positive electrode of a power supply 20 via the interface. A positive electrode of the output end of the BUCK circuit 101 is connected to a positive electrode of the output end of the DC/DC conversion circuit 10. In addition, the voltage regulator 102 is connected between the diode and the negative transmission branch in the BUCK circuit 101. FIG. 3 shows a common positive structure with an example where the quantity of the BUCK circuit 101 is N. As shown in FIG. 3, the input end and the output end of the BUCK circuit 101 share a common positive terminal. That is, a positive electrode of the input end of the BUCK circuit 101 and a positive electrode of the output end of the BUCK circuit 101 are both connected to a positive electrode of a corresponding interface of the input end of the DC/DC conversion circuit 10 and both connected to a positive electrode of the output end of the DC/DC conversion circuit 10. A negative electrode of the input end of the BUCK circuit 101 is connected to a negative electrode of the interface of the input end of the DC/DC conversion circuit 10, and is connected to a negative electrode of a power supply 20 via the interface. A negative electrode of the output end of the BUCK circuit 101 is connected to a negative electrode of the output end of the DC/DC conversion circuit 10. In addition, the voltage regulator 102 is connected between the diode and the positive transmission branch in the BUCK circuit 101.

For details about the common negative structure, reference can be made to FIG. 1 or FIG. 2. In the common negative structure, the negative transmission branch of the BUCK circuit 101 includes only wires, and both the inductor and the switching transistor in the BUCK circuit 101 are provided in the positive transmission branch. For example, taking the BUCK circuit 101 in FIG. 1 as an example, a terminal of the inductor L serves as the positive electrode of the input end of the BUCK circuit 101, another terminal of the inductor L is connected to a first terminal of the switching transistor S and the anode of the diode D, a second terminal of the switching transistor S is connected to the positive electrode of the output end of the BUCK circuit 101, and the cathode of the diode D is configured to connect the negative transmission branch of the BUCK circuit 101. In FIG. 2, the connection relationship of internal devices in each of the BUCK circuits 101 is the same as this, which is not described in detail.

For details about the common positive structure, reference can be made to FIG. 3. In the common positive structure, the positive transmission branch of the BUCK circuit 101 includes only wires, and both the inductor and the switching transistor in the BUCK circuit 101 are provided in the negative transmission branch. For example, taking the lowermost BUCK circuit 101 in FIG. 3 as an example, a terminal of the inductor L serves as the negative electrode of the input end of the BUCK circuit 101, another terminal of the inductor L is connected to a second terminal of the switching transistor S1 and an cathode of the diode D1, a first terminal of the switching transistor S1 is connected to the negative electrode of the output end of the BUCK circuit 101, and an anode of the diode D1 is connected to the positive transmission branch of the BUCK circuit 101. In FIG. 3, the connection relationship of internal devices in other BUCK circuits 101 is the same as this, which is not described in detail.

That is, in the present disclosure, which transmission branch the inductor and the switching transistor in the BUCK circuit 101 are provided in is not limited. Both of them may be provided in the positive transmission branch or in the negative transmission branch.

In addition, in both the common positive structure and the common negative structure, a sequence of the voltage regulator 102 and the diode in the BUCK circuit 101 connected in series in the branch is not limited. For example, for any of the BUCK circuits 101 in the common negative structure, one voltage regulator 102 may be connected between the cathode of the diode and the negative transmission branch (as shown in FIG. 1 or FIG. 2), or the voltage regulator 102 may be connected between the anode of the diode and the positive transmission branch (not shown). For any of the BUCK circuits 101 in the common positive structure, one voltage regulator 102 may be connected between the cathode of the diode and the negative transmission branch (not shown), or the voltage regulator 102 may be connected between the anode of the diode and the positive transmission branch (as shown in FIG. 3). The connection of the voltage regulator 102 is not limited herein, depending on the specific application environment.

In an example, in the common negative structure as shown in FIG.1 or FIG. 2, the voltage regulator 102 may be connected between the diode and the negative transmission branch in the BUCK circuit 101. For example, a positive electrode of the voltage regulator 102 is connected to the cathode of the diode, and a negative electrode of the voltage regulator 102 is connected to the negative transmission branch. In the common positive structure as shown in FIG. 3, the voltage regulator 102 may be connected between the diode and the positive transmission branch in the BUCK circuit 101. For example, the positive electrode of the voltage regulator 102 is connected to the positive transmission branch, and the negative electrode of the voltage regulator 102 is connected to the anode of the diode. Furthermore, when the quantity of the BUCK circuits 101 is greater than 1, the diodes in the respective BUCK circuits 101 may share one voltage regulator 102, that is, each diode may be connected in series with the voltage regulator 102. Taking the case shown in FIG. 2 as an example, the diode D1 is connected in series with the voltage regulator 102 to form a branch, and the branch is connected between the positive transmission branch and the negative transmission branch of the lowermost BUCK circuit 101. A diode D2 is connected in series with the voltage regulator 102 to form a branch, and the branch is connected between the positive transmission branch and the negative transmission branch of the middle BUCK circuit 101, ..., a diode DN is connected in series with the voltage regulator 102 to form a branch, and the branch is connected between the positive transmission branch and the negative transmission branch of the uppermost BUCK circuit 101. In this case, the quantity of the voltage regulator 102 can be reduced, thus reducing the cost.

In this embodiment, the quantity of the BUCK circuit 101 and the quantity of the voltage regulator 102 in the DC/DC conversion circuit 10 each are not limited. That is, the quantity of the BUCK circuit 101 may be greater than 1, the quantity of the voltage regulator 102 may be greater than 1, the quantities of the two are independent of each other, and thus the DC/DC conversion circuit 10 may be implemented in various structures, for example:
(1) The quantity of the voltage regulator 102 is 1, the quantity of the BUCK circuit 101 is greater than 1, and each of the BUCK circuits is connected in series with the voltage regulator 102.
   That is, as shown in FIG. 2 or FIG. 3, the quantity of the voltage regulator 102 can be greatly reduced in this case, reducing the cost.
(2) The quantity of the BUCK circuit is greater than 1, and at least two BUCK circuits 101 are connected to the same voltage regulator 102.
   In practice, if the quantity N of the BUCK circuits 101 is large, the BUCK circuits 101 may be grouped to share the voltage regulator 102. That is, in each group, the diodes in all the BUCK circuits 101 are connected in series with a same voltage regulator 102, and the quantity of the BUCK circuits 101 in each group is not limited. As long as at least two BUCK circuits 101 in one group are connected to a same voltage regulator 102, the voltage regulator 102 can be reduced by at least one in quantity, reducing the cost.
(3) The quantity of the voltage regulator 102 is greater than 1, and there is at least one BUCK circuit 101 connected to at least two voltage regulators 102.
   In this case, the quantity of the BUCK circuit 101 may be 1 or greater than 1, as long as there is one BUCK circuit 101 in which the diode between the positive transmission branch and the negative transmission branch is connected in series with at least two voltage regulators 102. The at least two voltage regulators 102 connected to the diode may be connected in parallel or in series, and a sequence of the diode and the at least two voltage regulators 102 connected in series in a branch is not limited. As long as the diode between the positive transmission branch and the negative transmission branch is connected in series with the voltage regulator 102, the ripple ratio of the inductor current in the BUCK circuit 101 can be reduced, and the voltage withstood by the switching transistor can be reduced, depending on the specific application environment.
(4) The quantity of the BUCK circuit 101 and the quantity of the voltage regulator 102 each are greater than 1, and the BUCK circuits 101 are connected to the voltage regulators 102 in one-to-one correspondence.

That is, the DC/DC conversion circuit 10 may include at least two structures shown in FIG. 1, and each structure includes one BUCK circuit 101 and one voltage regulator 102. Output ends of all the BUCK circuits 101 are connected in parallel. Furthermore, a sequence of the voltage regulator 102 and a diode connected in series in each structure is not limited, and the sequence of them connected in series may be the same or different in different structures, depending on the specific application environment.

In addition, a capacitor (Cin as shown in FIG. 1, or C1, C2,..., CN as shown in FIG. 2 or FIG. 3) may be connected between the positive electrode and the negative electrode of the input end of the BUCK circuit 101, to filter and stabilize the input voltage of the BUCK circuit 101. In addition, the output end of the DC/DC conversion circuit 10 may also be connected with a capacitor (such as Cout shown in FIGS. 1 to 3), to filter and stabilize the output voltage Vout of the BUCK circuit 101. The capacitor Cout belongs to the DC/DC conversion circuit 10. Alternatively, the capacitor Cout is connected between a positive electrode and a negative electrode of the direct-current bus. Alternatively, capacitors may be provided at the above two positions, respectively, depending on the specific application environment.

Due to the voltage division function of the voltage regulator 102, the BUCK circuit 101 connected to the voltage regulator 102 includes only one power switching device, that is, the BUCK circuit 101 may be implemented by the above basic BUCK topology.

In the present disclosure, the structure of the BUCK circuit 101 is not limited, a correspondence relationship between the quantity of the BUCK circuit 101 and the quantity of the voltage regulator 102 is not limited, and both of them depend on specific application scenario.

Based on the above embodiment, the DC/DC conversion circuit 10 is described in more detail in the present embodiment. For example, the voltage regulator 102 may be implemented by a device that is capable of stably regulating the voltage at a position. That is, the voltage regulator 102 may be implemented in various forms as follows.

The voltage regulator 102 may include a voltage stabilizing chip. An output end of the voltage stabilizing chip is connected in series with the diode between the positive transmission branch and the negative transmission branch in the BUCK circuit. The output end of the voltage stabilizing chip includes a positive electrode and a negative electrode. Taking the structure shown in FIG. 1 as an example, the positive electrode of the voltage stabilizing chip is connected to the cathode of the diode D, and the negative electrode of the voltage stabilizing chip is connected to the negative transmission branch. Cases in other structures and connection sequences are not described in detail.

Alternatively, the voltage regulator 102 may include a voltage stabilizing load. An input end of the voltage stabilizing load is connected in series with the diode between the positive transmission branch and the negative transmission branch in the BUCK circuit. The input end of the voltage stabilizing load includes a positive electrode and a negative electrode. Taking the structure shown in FIG. 1 as an example, the positive electrode of the voltage stabilizing load is connected to the cathode of the diode D, and the negative electrode of the voltage stabilizing load is connected to the negative transmission branch. Cases in other structures and connection sequences are not described in detail.

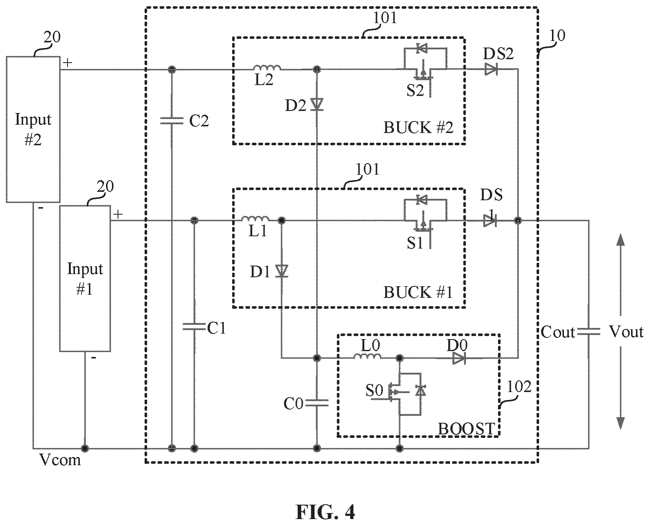

Alternatively, the voltage regulator 102 may include a BOOST circuit, such as BOOST shown in FIG. 4. A positive electrode and a negative electrode of an input end of the BOOST circuit serve as two terminals of the voltage regulator 102, and the BOOST circuit is connected in series with the diode between the positive transmission branch and the negative transmission branch in the BUCK circuit 101. An output end of the BOOST circuit may be connected to the output end of the DC/DC conversion circuit 10 (as shown in FIG. 4).

In practice, the BOOST circuit may be a two-level BOOST topology, such as the basic BOOST topology as shown in FIG. 4, which includes an inductor L0, a switching transistor S0 and a diode D0. As a power switching device, the switching transistor S0 is connected between a positive transmission branch and a negative transmission branch of the BOOST circuit, the inductor L0 is provided between the input end of the BOOST circuit and the switching transistor S0, and the diode D0 is provided between the switching transistor S0 and the output end of the BOOST circuit. Moreover, the BOOST circuit may have a common negative structure or a common positive structure. FIG. 4 shows a common negative structure as an example. In this case, the inductor L0 and the diode D0 are provided in the positive transmission branch (as shown in FIG. 4). In a common positive structure, the inductor L0 and the diode D0 are provided in the negative transmission branch (not shown). In addition, a capacitor C0 may be provided between the positive electrode and the negative electrode of the input end of the BOOST circuit.

FIG. 4 shows an example where the quantity of the BUCK circuits 101 is 2 and a common negative structure is employed, and detailed operation state thereof includes as follows.

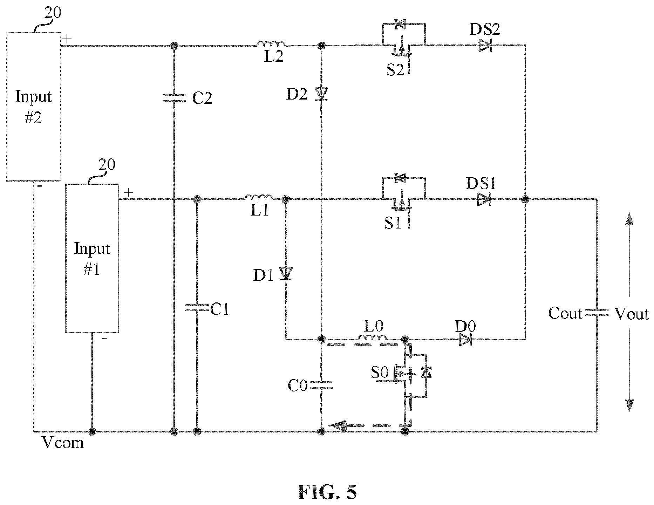

When the switching transistor S0 is turned on, a loop as shown by a dashed line with an arrow in FIG. 5 may be formed, the inductor L0 is charged, and the capacitor C0 in the voltage regulator 102 is discharged.

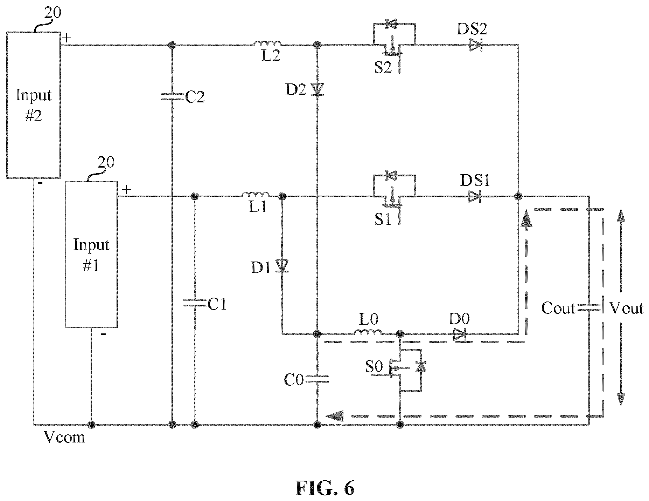

When the switching transistor S0 is turned off, a loop as shown by a dashed line with an arrow in FIG. 6 may be formed, the inductor L0 is discharged, and the capacitor C0 in the voltage regulator 102 is discharged.

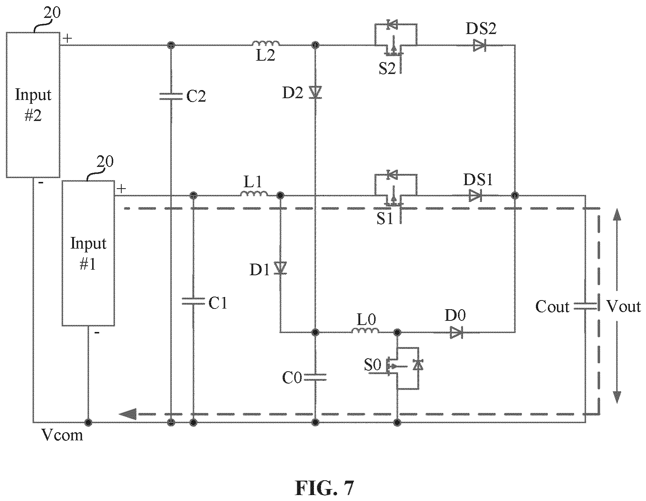

When the switching transistor S1 is turned on, a loop as shown by a dashed line with an arrow in FIG. 7 may be formed, and the inductor L1 is discharged.

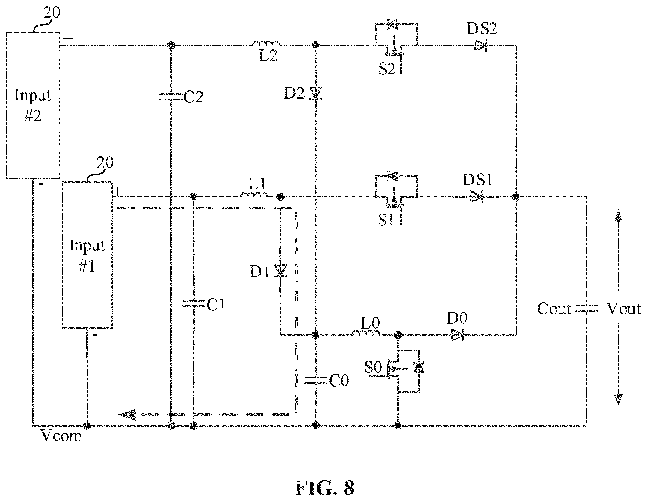

When the switching transistor S1 is turned off, a loop as shown by a dashed line with an arrow in FIG. 8 may be formed, the inductor L1 is charged, and the capacitor C0 in the voltage regulator 102 is charged.

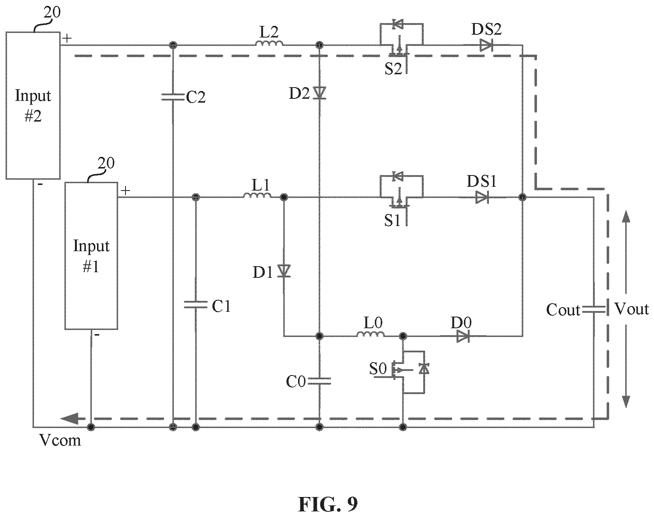

When the switching transistor S2 is turned on, a loop as shown by a dashed line with an arrow in FIG. 9 may be formed, and the inductor L2 is discharged.

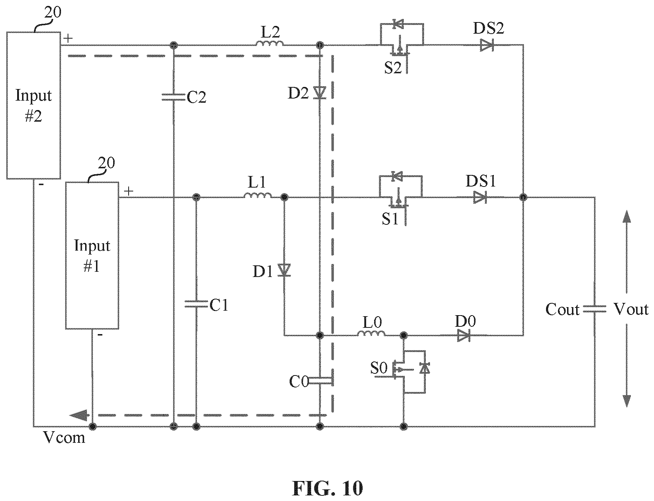

When the switching transistor S2 is turned off, a loop as shown by a dashed line with an arrow in FIG. 10 may be formed, the inductor L2 is charged, and the capacitor C0 in the voltage regulator 102 is charged.

In addition, the DC/DC conversion circuit 10 may further include: at least one unidirectional conduction device, such as diodes DS1 and DS2 shown in FIGS. 4 to 10. The unidirectional conduction device is connected in series with the switching transistor in the BUCK circuit 101. That is, the switching transistors in the respective BUCK circuits 101 are connected in series with respective unidirectional conduction device.

As shown in FIG. 4, the diode DS1 is connected in series with the switching transistor S1, and the diode DS2 is connected in series with the switching transistor S2. In addition, a forward direction of the unidirectional conduction device is a direction in which current flows though the unidirectional conduction device when the switching transistor in the BUCK circuit 101 connected to the unidirectional conduction device is on. Cases with more BUCK circuits 101 are similar to the above and are not described in detail herein. In this case, even if an output voltage of the BOOST circuit is higher than an output voltages of any of the BUCK circuits 101, current of the BOOST circuit can be prevented from flowing back to the BUCK circuit 101 when the output end of the BOOST circuit is connected in parallel with the output ends of the BUCK circuits.

In an actual application scenario of a photovoltaic system, when the power supplies 20 (Input #1, Input #2, ..., Input #N as shown in FIG. 2 or FIG. 3, or Input #1 and Input #2 as shown in FIGS. 4 to 10) have insignificant difference in input characteristics, the voltage regulator 102 with high voltage and high power may be provided, so that each of the BUCK circuits 101 may be provided with a device with a low tolerance. Additionally, basic power control for Maximum Power Point Tracking (MPPT) may be performed by means of the voltage regulator 102, so that MPPT for all the power supplies 20 can be achieved only by slightly regulating the input voltages of the BUCK circuits 101.

In particular, when the power supplies 20 are basically the same in input characteristics, the switching transistors in the BUCK circuits 101 may be completely turned off, so that the DC/DC conversion circuit 10 can achieve MPPT for all power supplies 20 only through the voltage regulator 102.

Therefore, the DC/DC conversion circuit 10 in the present embodiment has significant advantages in hardware selection and software control in an application scenario in which the power supplies 20 have insignificant difference in configurations.

It is worth noting that, a conventional BOOST topology used in the preceding-stage DC/DC conversion circuit 10 in the photovoltaic inverter system in the related technology only has a boost function, and the input voltage is less than or equal to the output voltage during operation of the DC/DC conversion circuit 10. In some practical application scenarios, due to an excessive configuration of photovoltaic modules or external environmental factors such as temperature and irradiance and the like, the input voltage may be above a normal design range. As a result, the output voltage increases with the increase of the input voltage. However, an excessively high output voltage may affect the normal operation of a power converter such as an inverter in the system.

In the DC/DC conversion circuit 10 according to the embodiment, the boost function can be realized by the voltage regulator 102 that is connected in series with the BUCK circuit 101. Thus, the DC/DC conversion circuit 10 in this embodiment is applicable to an application scenario in which the input voltage is too high and an output voltage affects operation, especially an application scenario in which the photovoltaic modules have an excessive DC/AC oversizing. The power converter implemented by the topology can support a high DC/AC oversizing ratio of the photovoltaic modules, thus improving the power generation of the photovoltaic station.

In practice, the output end of the BOOST circuit may further be connected to a battery or a load circuit (not shown), which is not limited herein. Thus, the voltage of the battery or the voltage of the load circuit can be regulated, or a suitable voltage can be supplied to the load circuit.

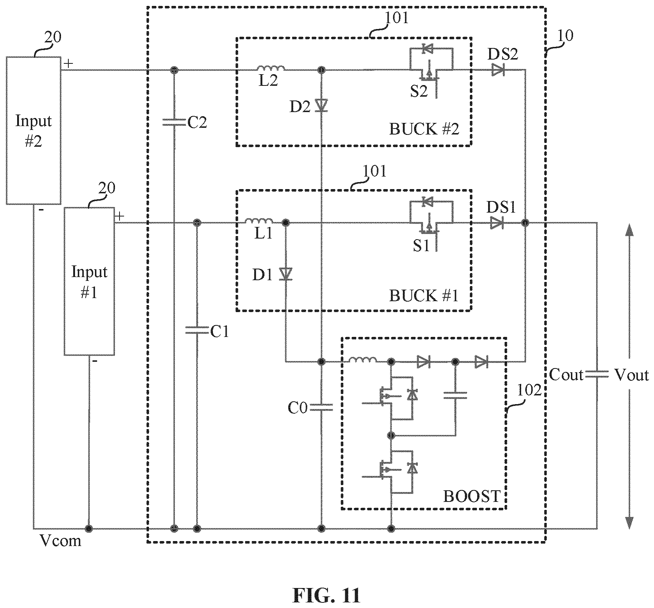

In addition, the BOOST circuit may be implemented by a three-level BOOST topology (FIG. 11 shows an example that the BOOST circuit is implemented by a three-level flying-capacitor BOOST topology based on FIG. 4), or the like. In the present disclosure, the implementations of the voltage regulator 102 are not limited, depending on the specific application environment. The implementations fall within the scope of protection of the present disclosure as long as they can reduce the ripple ratio of the inductor current and reduce the voltage withstood by the switching transistor.

A method for controlling a DC/DC conversion circuit is further provided according to another embodiment of the present disclosure. The DC/DC conversion circuit includes at least one BUCK circuit and at least one voltage regulator. A diode between a positive transmission branch and a negative transmission branch in the BUCK circuit is connected in series with the voltage regulator. For the structure and operation principle of the DC/DC conversion circuit, reference may be made to the above embodiment, which is not repeated herein.

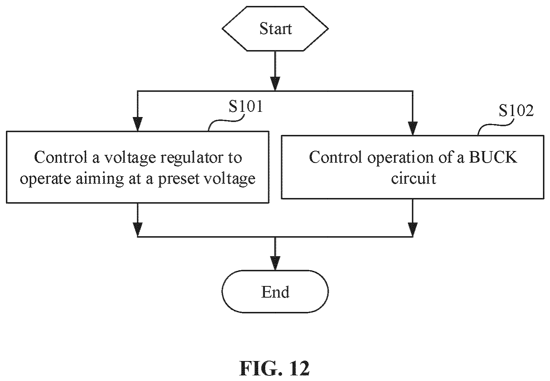

As shown in FIG. 12, the method for controlling a DC/DC conversion circuit includes steps S101 and S102.

In step S101, the voltage regulator is controlled to operate aiming at a preset voltage.

In an embodiment, the step S101 includes: controlling the voltage regulator to operate aiming at a voltage of the voltage regulator reaching a preset voltage, where the voltage regulator withstands a preset portion of an input voltage of the BUCK circuit connected to the voltage regulator.

Taking an application scenario of a photovoltaic inverter system as an example, the voltage regulator may be controlled to withstand the preset portion of the input voltage of the BUCK circuit connected to the voltage regulator, such as a large portion of the input voltage, so that the voltage regulator operates at the preset voltage or operates within a range around the preset voltage, and the photovoltaic string connected to the BUCK circuit approaches a maximum power point of the photovoltaic string.

Further, during the step S101, in a case that at least two BUCK circuits connected to the same voltage regulator, the voltage regulator is controlled to withstand the preset portion of the input voltage of the BUCK circuit connected to the voltage regulator by: controlling the voltage of the voltage regulator to be a minimum voltage among the input voltages of the at least two BUCK circuits connected to the voltage regulator. That is, the preset voltage may refer to the minimum voltage among the input voltages of the at least two BUCK circuits.

Alternatively, in the application scenario of the photovoltaic inverter system, based on the configurations of respective photovoltaic strings, Maximum Power Point (MPP) voltages of each photovoltaic string under various lighting conditions may be determined through advance experiments or real-time detections. For each of the lighting conditions, a suitable voltage, such as a minimum voltage, is selected from the MPP voltages of photovoltaic strings sharing one voltage regulator as a preset voltage of the voltage regulator under the lighting condition, so that the voltage regulator withstands a large portion of the MPP voltages. That is, the preset voltage may be a preset value under a current lighting condition.

In practice, the operation of the voltage regulator may be controlled in other manners. Here are only some optional examples and are not limited thereto.

With the step S101, the voltage regulator may withstand a large portion of power of the BUCK circuit connected to the voltage regulator when MPPT is achieved, so that the BUCK circuit can achieve MPPT with less power. In a case that the diodes in at least two BUCK circuits are connected in series with one voltage regulator, as shown in FIG. 2 or FIG. 3, the power of the voltage regulator is a sum of most of the powers of the respective BUCK circuits when achieving MPPT. Thus, the BUCK circuits can achieve MPPT with less power by sharing one voltage regulator.

In step S102, operation of the BUCK circuit is controlled.

When the power supply that is connected to the input end of the BUCK circuit includes one photovoltaic string or at least two photovoltaic strings connected in parallel, the step S102 aims to cause the BUCK circuit to operate at the MPP of the power supply connected to the BUCK circuit. In practice, the power supply that is connected to the input end of the BUCK circuit may include one battery cluster or at least two battery clusters connected in parallel, which is not limited herein, depending on the specific application environment.

In practice, the step S102 may include the following two cases.

In a first case where an input voltage of the BUCK circuit is greater than a voltage of the voltage regulator connected to the BUCK circuit, the input voltage of the BUCK circuit is regulated.

For example, the power supply connected to the input end of the BUCK circuit includes one photovoltaic string or at least two photovoltaic strings connected in parallel. Under a normal operation state, the BUCK circuit is in an MPPT mode and the input voltage of the BUCK circuit is the MPP voltage of the photovoltaic string connected to the BUCK circuit. In a case that the voltage regulator connected to the BUCK circuit withstands a large portion of the input voltage, a voltage of a branch formed by an inductor connected in series with the switching transistor may be modified by controlling the operation of the BUCK circuit, and the input voltage of the BUCK circuit may be slightly regulated to make the input voltage of the BUCK circuit equal to the MPP voltage of the photovoltaic string connected to the BUCK circuit, so that the BUCK circuit can achieve MPPT.

In practice, the input voltage of the BUCK circuit is regulated in various methods such as a disturbance observation method, an incremental conductance method, or a constant voltage method. The method for regulating the input voltage of the BUCK circuit is not limited in this embodiment, depending on its specific application environment. In addition, for the detailed descriptions of the disturbance observation method, the incremental conductance method, and the constant voltage method, reference may be made to the related technology, which are not repeated herein.

The regulating the input voltage of the BUCK circuit may include controlling the switching transistor in the BUCK circuit to perform a chopping operation. Reference can be made to the related technology for a detailed process of the controlling, which is not described herein in detail.

In a second case where at least two BUCK circuits connected to a same voltage regulator and input characteristics of the at least two BUCK circuits meet a preset consistency condition, or the voltage of the voltage regulator connected to the BUCK circuit is equal to a MPP voltage of a power supply connected to the BUCK circuit, the switching transistors in the at least two BUCK circuits are controlled to be always off.

In a case that the diodes between the positive transmission branch and the negative transmission branch in at least two BUCK circuits are connected in series with the same voltage regulator, if the respective photovoltaic strings are basically the same in the input characteristics, that is, the preset consistency condition is met, then the switching transistors in the at least two BUCK circuits may be completely turned off, that is, the switching transistors are controlled to be always off. Thus, with the same voltage regulator, the MPPT for the photovoltaic strings connected to the voltage regulator is achieved, thus reducing the control complexity of software.

In a case that the diodes between the positive transmission branch and the negative transmission branch in at least two BUCK circuits is connected in series with the same voltage regulator, if the respective photovoltaic strings are different in input characteristics, the BUCK circuit connected to the photovoltaic string with the worst input characteristic has the minimum input voltage, and the switching transistor in the BUCK circuit may be always off, as long as the voltage of the voltage regulator connected to the BUCK circuit is set as the input voltage of the BUCK circuit. This control method may also be used in a scenario that one voltage regulator is connected to only one BUCK circuit.

In a case that the power supply is not a photovoltaic string, the voltage regulator may also withstand a portion of the input voltage of the BUCK circuit connected to the voltage regulator. The control principle thereof is similar to this, and thus is not described in detail.

With the method for controlling a DC/DC conversion circuit according to the embodiment, the voltage regulator connected to the BUCK circuit can withstand a large portion of the power and a large portion of the input voltage of the BUCK circuit, thus reducing the ripple ratio of the inductor current and reducing the voltage withstood by the switching transistor, so that the inductor and the switching transistor each can be implemented by a device with a lower specification. In a case that multiple BUCK circuits are connected to a same voltage regulator, the control complexity of software can be reduced while the hardware cost can be greatly reduced.

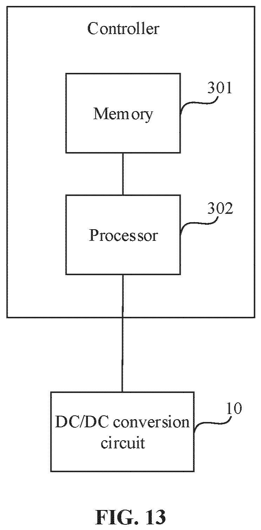

A controller is further provided according to another embodiment of the present disclosure. As shown in FIG. 13, the controller may include a memory 301 and a processor 302. The processor 302 may be connected to the DC/DC conversion circuit 10 in the above embodiments, and may be configured to drive each switching transistor in the DC/DC conversion circuit 10.

In an embodiment, the memory 301 may be a random access memory (RAM), a flash memory, a read-only memory (ROM), an electronic programmable ROM (EPROM, which is a non-volatile read-only memory), a register, a hard disk, a removable disk, or the like.

The memory 301 is configured to store computer instructions, and when the computer instructions stored in the memory 301 are executed by the processor 302, the processor 302 may be configured to perform the method for controlling a DC/DC conversion circuit according to any of the above embodiments. The memory 301 may further be configured to store data, for example, information such as the preset voltage involved in the foregoing embodiments.

All or some of the foregoing embodiments may be implemented by using software, hardware, firmware, or any combination thereof. When the embodiments are implemented by using software, all or some of the embodiments may be implemented in a form of a computer program product. The computer program product includes one or more computer instructions. When the computer program instructions are loaded and executed on a computer, all or some of the processes or functions according to the embodiments of the present disclosure are produced. The computer may be a general-purpose computer, a special-purpose computer, a computer network, or another programmable apparatus. The computer instructions may be stored in a computer readable storage medium or transmitted from one computer readable storage medium to another computer readable storage medium. For example, the computer instructions may be transmitted from one website, computer, server or data center to another website, computer, server or data center in a wired (for example, a coaxial cable, an optical fiber or a digital subscriber line (DSL)) or wireless (for example, infrared, wireless or microwave) manner. The computer readable storage medium may be any available medium capable of being accessed by a computer or include one or more data storage devices integrated by an available medium, such as a server, a data center and the like. The available medium may be a magnetic medium (for example, a floppy disk, a hard disk, or a magnetic tape), a semiconductor medium (for example, a solid state disk (SSD)), or another medium, which is not limited herein.

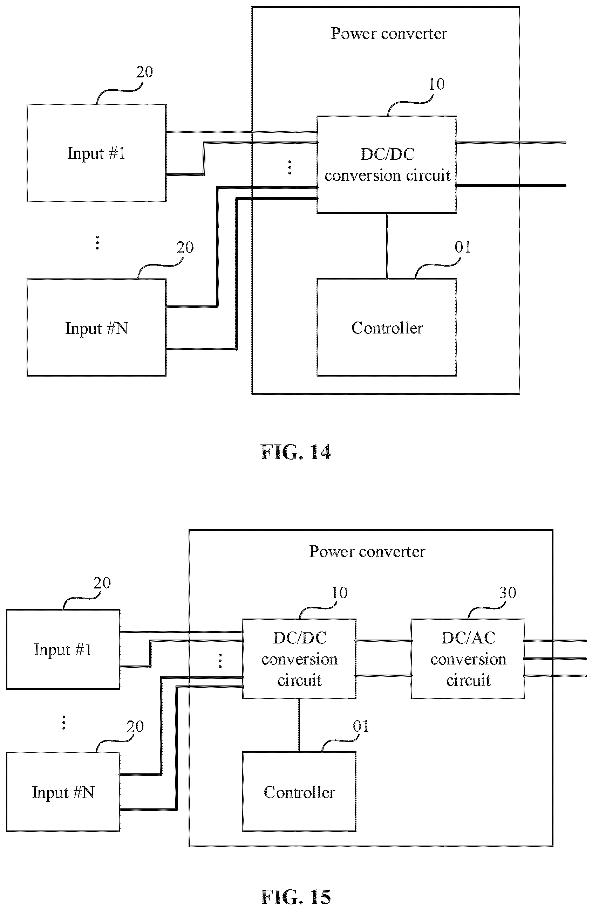

A power converter is further provided according to another embodiment of the present disclosure. As shown in FIG. 14, the power converter includes a controller 01 and a DC/DC conversion circuit 10.

An input end of the DC/DC conversion circuit 10 is configured to connect at least one power supply 20 (for example, multiple power supplies Input #1 to Input #N are shown in FIG. 14). The input end of the DC/DC conversion circuit 10 may be provided with multiple interfaces, and each interface is connected to one power supply 20. The power supply 20 may include one photovoltaic string or at least two photovoltaic strings connected in parallel. Alternatively, the power supply 20 may include one battery cluster or at least two battery clusters connected in parallel, which is not limited herein, depending on an actual application scenario.

An output end of the DC/DC conversion circuit 10 may be connected to a direct-current bus of an inverter system.

For the detailed structure and operation principle of the DC/DC conversion circuit, reference may be made to the above embodiment, which is not repeated herein.

In addition, the DC/DC conversion circuit 10 is controlled by the controller 01. The controller 01 is configured to perform the method for controlling a DC/DC conversion circuit according to any of the embodiments as described above. The detailed process and principle of the method for controlling a DC/DC conversion circuit may be referred to the above embodiments, which are not repeated herein.

In practice, the power converter may further include a DC/AC conversion circuit 30 shown in FIG. 15. A direct-current side of the DC/AC conversion circuit 30 is connected to the output end of the DC/DC conversion circuit 10. When the DC/DC conversion circuit 10 includes multiple BUCK circuits, output ends of all the BUCK circuits may be connected in parallel, and are connected to the direct-current side of the DC/AC conversion circuit 30 via a direct-current bus. An alternating-current side of the DC/AC conversion circuit is configured to connect at least one of a power grid and a load. The alternating-current side of the DC/AC conversion circuit 30 may be configured to output three-phase alternating-current power (as shown in FIG. 15), or output single-phase alternating-current power (not shown). The DC/AC conversion circuit 30 is controlled by the controller 01, to realize an inverting function on the output power of the DC/DC conversion circuit 10.

The power converter in the structure shown in FIG. 14 may serve as an intelligent combiner box in a photovoltaic inverter system, or serve as an energy storage DC/DC converter connected to a direct-current bus of a photovoltaic inverter in a photovoltaic energy storage system. The power converter in the structure shown in FIG. 15 may serve as a string inverter in a photovoltaic inverter system, or serve as a power conversion system in an energy storage system or in a photovoltaic energy storage system, which is not limited herein, depending on the application environment.

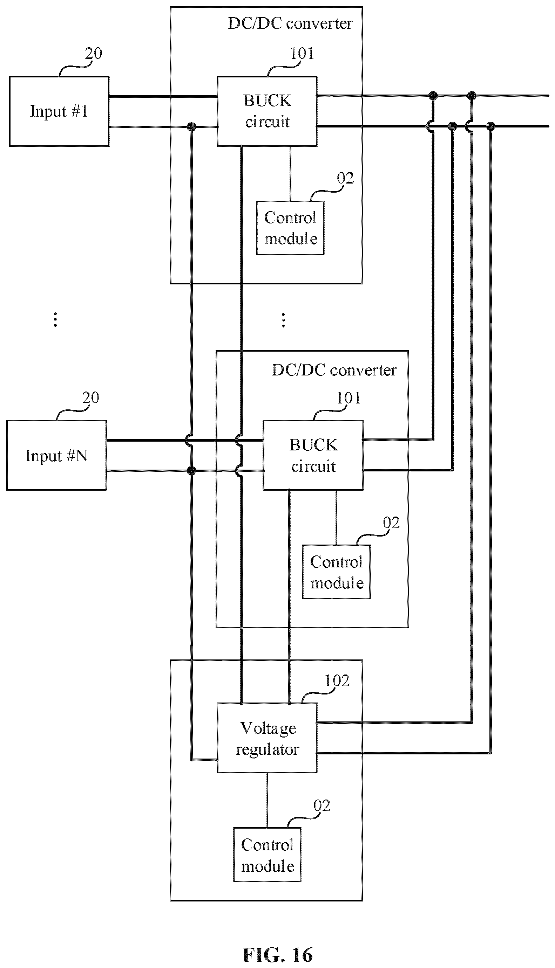

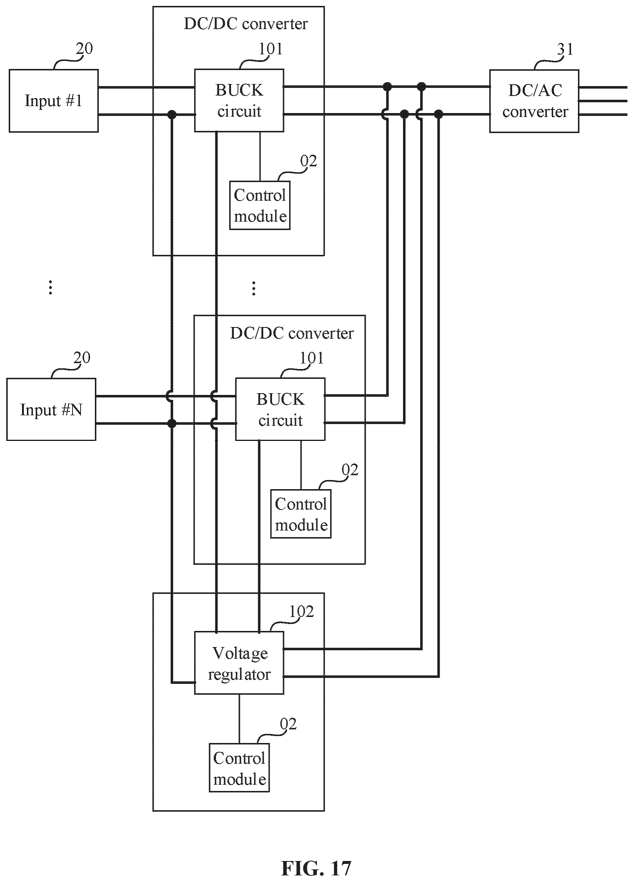

In practice, the controller 01 may serve as a whole, or may include multiple modules (control modules 02 shown in FIG. 16 or FIG. 17) connected in communication with each other. As shown in FIG. 16 or FIG. 17, in a case that the controller 01 includes multiple control modules 02, the voltage regulator 102 and the BUCK circuit 101 in the DC/DC conversion circuit 10 are integrated with their respective control modules 02 in respective device housings, and are controlled by their respective control modules 02. For example, the BUCK circuit 101 may be integrated with a control module 02 in one DC/DC converter, and the voltage regulator 102 may be integrated with another control module 02 in another DC/DC converter when the voltage regulator 102 includes a BOOST circuit. FIG. 16 shows the connection relationship when the BUCK circuit 101 is implemented by a common negative structure as an example based on FIG. 14, and the connection relationship is not limited thereto in practice.

In this case, the DC/AC conversion circuit 30 shown in FIG. 15 may also be integrated with a control module in a device housing, for example a DC/AC converter 31 shown in FIG. 17. The control module inside the DC/AC converter 31 may be connected in communication with the control modules 02.

In this embodiment, the power converter provided with the DC/DC conversion circuit 10 described in the above embodiment, thus reducing the hardware cost, supporting a high DC/AC oversizing ratio of the photovoltaic module, improving the power generation capacity of the photovoltaic station. By means of the method for controlling a DC/DC conversion circuit described in the above embodiments, the control complexity of the software can be reduced.

Reference may be made to each other of the same and similar parts between the various embodiments in this specification and each embodiment focuses on its differences from other embodiments. In particular, for the system or system embodiments, since they are basically similar to the method embodiments, the description is relatively simple. For relevant details, reference can be made to the description of the method embodiments. The systems and system embodiments described above are only illustrative, in which the units described as separate components may or may not be physically separated, and the components shown as units may or may not be physical units, that is, may be located in one place, or distributed over multiple network elements. Some or all of the modules can be selected according to actual needs to achieve the purpose of the solution of this embodiment. Those skilled in the art can understand and implement the method without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the components and steps of each example have been described in general terms of functionality in the above description. Whether these functions are performed in hardware or software form depends on the specific application and design constraints of the technical solution. Those skilled in the art may use different methods to implement the described functions for each specific application, but such implementation should not be regarded as exceeding the scope of the present disclosure.

Based on the disclosed embodiments described above, the features in embodiments in this specification may be replaced or combined with each other, so that those skilled in the art can implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the broadest scope consistent with the principle and novel features disclosed herein.

## Claims

1. A direct-current/direct-current (DC/DC) conversion circuit, **characterized by** comprising:
a BUCK circuit, wherein a quantity of the BUCK circuit is at least one; and
a voltage regulator, wherein a quantity of the voltage regulator is at least one; wherein
an input end of the BUCK circuit is connected to a corresponding interface of an input end of the DC/DC conversion circuit;
an output end of the BUCK circuit is connected to an output end of the DC/DC conversion circuit; and
a diode is arranged between a positive transmission branch and a negative transmission branch in the BUCK circuit, and is connected in series with the voltage regulator.

2. The DC/DC conversion circuit according to claim 1, wherein
the quantity of the BUCK circuit and the quantity of the voltage regulator each are greater than 1, and the BUCK circuits are connected to the voltage regulators in one-to-one correspondence;
the quantity of the voltage regulator is greater than 1, and a quantity of the BUCK circuit connected to at least two of the voltage regulators is at least one;
the quantity of the BUCK circuit is greater than 1, and at least two of the BUCK circuits are connected to one of the voltage regulator; or
the quantity of the voltage regulator is 1, the quantity of the BUCK circuit is greater than 1, and each of the BUCK circuits is connected in series with the voltage regulator.

3. The DC/DC conversion circuit according to claim 1 or 2, wherein
the voltage regulator comprises a voltage stabilizing chip, and an output end of the voltage stabilizing chip is connected in series with the diode between the positive transmission branch and the negative transmission branch in the BUCK circuit;
the voltage regulator comprises a voltage stabilizing load, and an input end of the voltage stabilizing load is connected in series with the diode between the positive transmission branch and the negative transmission branch in the BUCK circuit; or
the voltage regulator comprises a BOOST circuit, and an input end of the BOOST circuit is connected in series with the diode between the positive transmission branch and the negative transmission branch in the BUCK circuit.

4. The DC/DC conversion circuit according to claim 3, wherein when the voltage regulator comprises the BOOST circuit,
an output end of the BOOST circuit is connected to the output end of the DC/DC conversion circuit; or
an output end of the BOOST circuit is connected to a battery or a load circuit.

5. The DC/DC conversion circuit according to claim 3 or 4, wherein the BOOST circuit is implemented by a two-level BOOST topology or a three-level BOOST topology.

6. The DC/DC conversion circuit according to any one of claims 1 to 5, further comprising: at least one unidirectional conduction device, wherein
the unidirectional conduction device is connected in series with a switching transistor in the BUCK circuit; and
a forward direction of the unidirectional conduction device is a direction in which current flows though the unidirectional conduction device when the switching transistor connected to the unidirectional conduction device is on.

7. The DC/DC conversion circuit according to any one of claims 1 to 6, wherein
a positive electrode of the input end of the BUCK circuit is connected to a positive electrode of the corresponding interface of the input end of the DC/DC conversion circuit, a positive electrode of the output end of the BUCK circuit is connected to a positive electrode of the output end of the DC/DC conversion circuit, a negative electrode of the input end of the BUCK circuit and a negative electrode of the output end of the BUCK circuit are both connected to a negative electrode of the corresponding interface of the input end of the DC/DC conversion circuit and both connected to a negative electrode of the output end of the DC/DC conversion circuit, and the voltage regulator is connected between the diode and the negative transmission branch in the BUCK circuit; or
a negative electrode of the input end of the BUCK circuit is connected to a negative electrode of the corresponding interface of the input end of the DC/DC conversion circuit, a negative electrode of the output end of the BUCK circuit is connected to a negative electrode of the output end of the DC/DC conversion circuit, a positive electrode of the input end of the BUCK circuit and a positive electrode of the output end of the BUCK circuit are both connected to a positive electrode of the corresponding interface of the input end of the DC/DC conversion circuit and a positive electrode of the output end of the DC/DC conversion circuit, and the voltage regulator is connected between the diode and the positive transmission branch in the BUCK circuit.

8. A method for controlling a DC/DC conversion circuit, comprising:
controlling a voltage regulator connected in series with a diode in a BUCK circuit of the DC/DC conversion circuit to operate aiming at a preset voltage, wherein the diode is arranged between a positive transmission branch and a negative transmission branch in the BUCK circuit; and
controlling operation of the BUCK circuit.

9. The method for controlling a DC/DC conversion circuit according to claim 8, wherein the controlling operation of the BUCK circuit comprises:
controlling the BUCK circuit to operate at a maximum power point of a power supply connected to the BUCK circuit.

10. The method for controlling a DC/DC conversion circuit according to claim 8 or 9, wherein the controlling operation of the BUCK circuit comprises:
regulating, in response to an input voltage of the BUCK circuit being greater than a voltage of the voltage regulator connected to the BUCK circuit, the input voltage of the BUCK circuit; and
controlling, in response to at least two BUCK circuits connected to one voltage regulator and input characteristics of the at least two BUCK circuits meet a preset consistency condition, or in response to the voltage of the voltage regulator connected to the BUCK circuit being equal to a maximum power point voltage of a power supply connected to the BUCK circuit, a switching transistor in the BUCK circuit to be always off,
wherein the regulating the input voltage of the BUCK circuit comprises controlling the switching transistor in the BUCK circuit to perform a chopping operation.

11. The method for controlling a DC/DC conversion circuit according to any one of claims 8 to 10, wherein the controlling the voltage regulator connected in series with the diode in the BUCK circuit of the DC/DC conversion circuit to operate aiming at the preset voltage comprises:
controlling the voltage regulator to operate aiming at a voltage of the voltage regulator reaching the preset voltage, wherein the voltage regulator withstands a preset portion of the input voltage of the BUCK circuit connected to the voltage regulator.

12. The method for controlling a DC/DC conversion circuit according to claim 11, wherein when at least two BUCK circuits are connected to one voltage regulator, the preset voltage is:
a minimum voltage among input voltages of the at least two BUCK circuits connected to the voltage regulator; or
a preset value under a current lighting condition in response to a power supply connected to the BUCK circuit comprising a photovoltaic module.

13. A controller, comprising:
a memory, configured to store a program, an instruction, or a code; and
a processor, configured to perform, when executing the program, the instruction, or the code in the memory, the method for controlling a DC/DC conversion circuit according to any one of claims 8 to 12.

14. A power converter, comprising:
a controller, configured to perform the method for controlling a DC/DC conversion circuit according to any one of claims 8 to 12; and
the DC/DC conversion circuit according to any one of claims 1 to 7; wherein the DC/DC conversion circuit is controlled by the controller.

15. The power converter according to claim 14, further comprising: a direct-current/alternating-current (DC/AC) conversion circuit; wherein
a direct-current side of the DC/AC conversion circuit is connected to an output end of the DC/DC conversion circuit;
an alternating-current side of the DC/AC conversion circuit is configured to connect at least one of a power grid and a load; and
the DC/AC conversion circuit is controlled by the controller.
